Europäisches Patentamt

European Patent Office

Office européen des brevets

(11) Publication number: **0 409 806 A2**

# EUROPEAN PATENT APPLICATION

(21) Application number: **90830330.8**

(22) Date of filing: **17.07.90**

(51) Int. Cl.5: **H02G 3/04**

(30) Priority: **19.07.89 IT 5326389 U**

(43) Date of publication of application:
**23.01.91 Bulletin 91/04**

(84) Designated Contracting States:
**AT BE CH DE DK ES FR GB GR LI LU NL SE**

(71) Applicant: **GAMMA P INDUSTRIALE SOCIETA PER AZIONI:**
**Via Umberto Giordano 1**
**I-15100 Allessandria(IT)**

(72) Inventor: **Cerafogli, Fernando**
**Via XXIV Maggio 48**
**I-15100 Alessandria(IT)**
Inventor: **Marzolla, Agostino**
**Via de Gasperi 59**
**I-15100 Alessandria(IT)**

(74) Representative: **Buzzi, Franco et al**
**c/o Jacobacci-Casetta & Perani S.p.A. Via Alfieri, 17 17**
**I-10121 Torino(IT)**

(54) **Protective conduit for electrical cables.**

(57) A protective conduit (1) for electrical cables, in which the channel (2) and its cover (S) are interconnected by means of revolving catches (14,114) which are carried by the cover (3) and are adapted to clamp bent edge parts (8) of the side walls (6) of the channel (2) against corresponding longitudinal bearing parts (11) of the cover (3).

FIG. 4

EP 0 409 806 A2

# A PROTECTIVE CONDUIT FOR ELECTRICAL CABLES

The present invention relates in general to protective conduits for electrical cables.

More particularly, the invention is concerned with a conduit of the type comprising a channel, a cover, and means for interconnecting the cover and the channel in a quickly separable manner.

Conventionally, in known conduits of this type, the means for connecting the channel and the cover are constituted by levers articulated to the side walls of the channel and cooperating with complementary hooks carried by edge portions of the cover which are bent parallel to the side walls of the channel.

This arrangement is complicated and expensive since it involves the use of a large number of components and consequent difficulties in their assembly and fixing to the conduit.

In order to avoid this problem, the subject of the invention is a sealed conduit of the type defined at the beginning, characterised in that the channel has side walls with free edges which are bent inwardly of the conduit and on which corresponding longitudinal end parts of the cover bear with the interposition of respective seals, and in that the interconnection means comprise a plurality of revolving catches spaced along the conduit and carried by the cover so as to be rotatable between a clamping position in which they engage the aforesaid bent edges of the channel from below and clamp them against the corresponding longitudinal bearing parts of the cover, and a release position in which they do not interfere with the channel.

Each revolving catch conveniently comprises an operating pin inserted rotatably in a hole in the cover and having an operating part which can be operated from outside the channel, the pin being coupled for rotation with an internal cam member constituted by at least one radial arm adapted to cooperate with a corresponding bent end of the channel.

According to the width of the channel, the revolving catches may be arranged in a single row along the centre of the cover, in which case their cam members each have a pair of opposed radial arms for cooperating simultaneously with both the bent edges of the channel, or in two rows adjacent the opposite sides of the cover. In this case, each cam member has only one radial arm for cooperating with a respective, adjacent bent edge of the channel.

The invention will now be described in detail with reference to the appended drawings, provided purely by way of non-limiting example, in which:

Figure 1 is a perspective view of part of a sealed conduit for electrical cables according to the invention,

Figure 2 is a cross-section taken on the line II-II of Figure 1,

Figure 3 is a paritally-sectioned view similar to Figure 1,

Figure 4 is an exploded view of Figure 3,

Figure 5 is a partial axial section of a detail of the conduit,

Figure 6 is a section taken on the line VI-VI of Figure 5,

Figure 7 is a plan view taken on the arrow VII of Figure 5,

Figure 8 is a partial longitudinal section of another detail of the conduit,

Figure 9 is a plan view taken on the arrow IX of Figure 8,

Figure 10 is a variant of Figure 1,

Figure 11 is a partial cross-section taken on the line XI-XI of Figure 10,

Figure 12 is a partial longitudinal section of a detail of the conduit of Figures 10 and 11, and

Figure 13 is a plan view taken on the arrow XIII of Figure 12.

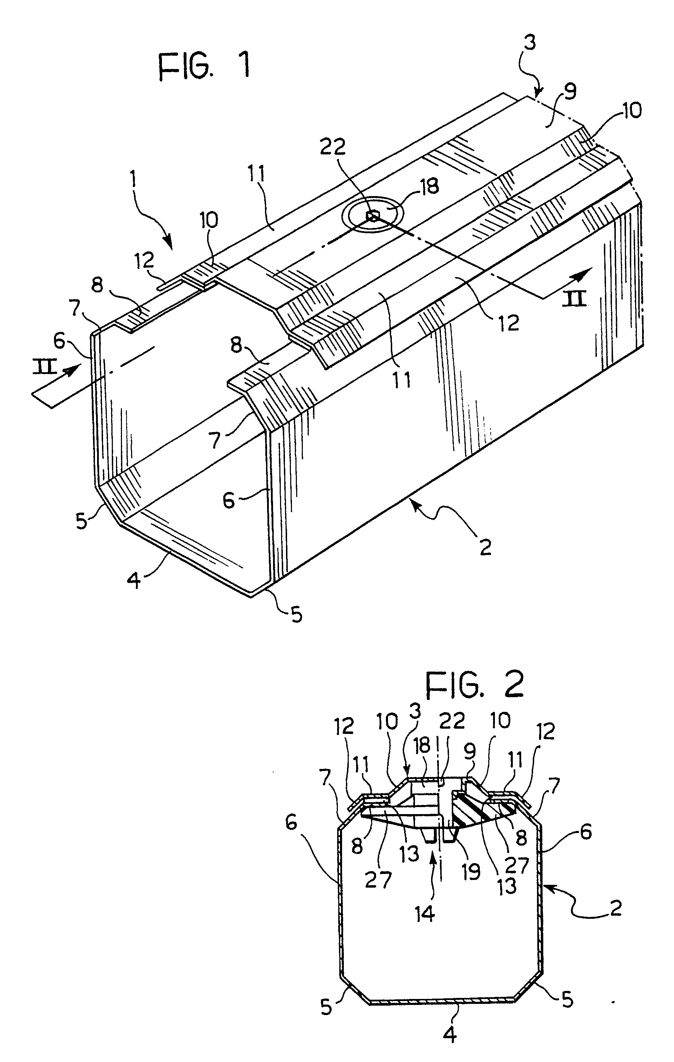

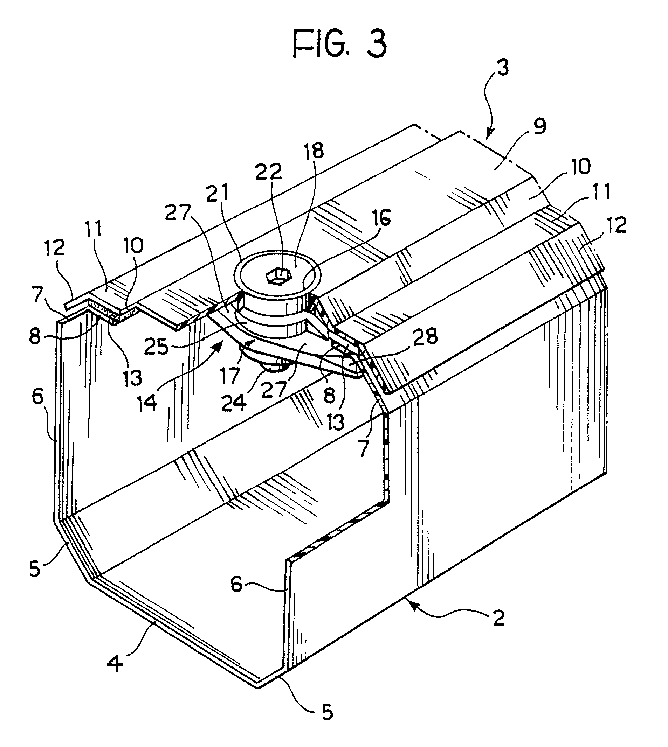

With reference first of all to Figures 1 to 4, a sealed conduit for electrical cables, generally indicated 1, is constituted by a channel 2 and a cover 3 fitted to the top of the channel 2.

The channel 2 has a horizontal base wall 4 connected by two inclined portions 5 to two vertical side walls 6 whose free edges are bent inwardly of the conduit 1 to form two inclined portions 7 similar to the inclined portions 5 and two horizontal end portions 8.

The width of the channel 2 is substantially equal to its height.

The cover 3 has a central raised portion 9 connected along its longitudinal edges to two first inclined portions 10 which are connected in turn to two horizontal portions 11 connected to two second inclined portions 12.

The horizontal portions 11 of the cover 3 bear on the horizontal portions 8 of the side walls 6 of the channel 2 with the interposition of respective longitudinal seals 13. The second inclined portions 12 are superposed on parts of the inclined sides 7, substantially parallel thereto.

The channel 2 and the cover 3 are interconnected by a series of revolving catches, generally indicated 14, arranged in a row along the middle of the central part 9 of the cover 3.

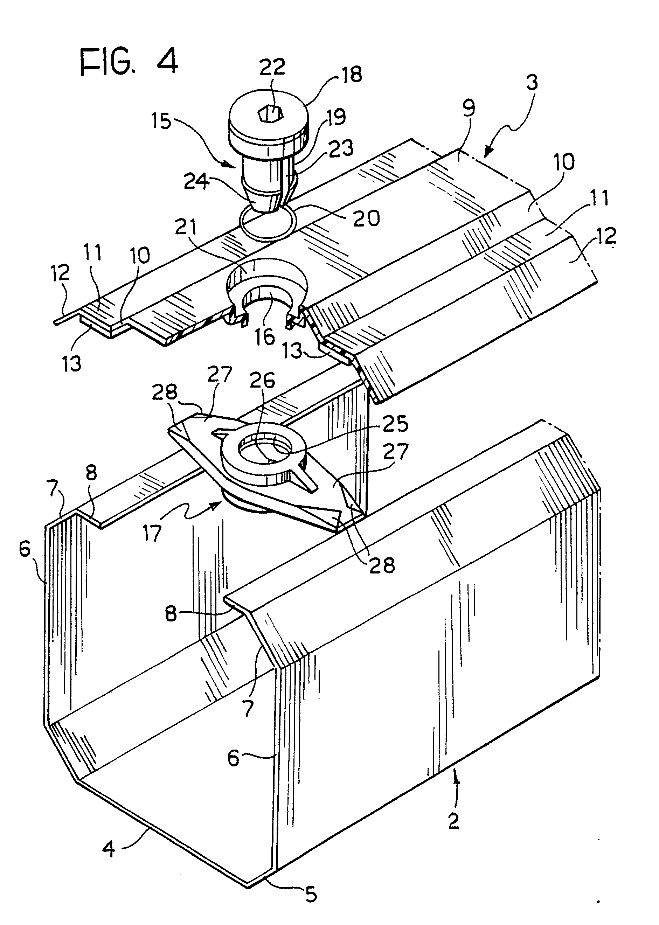

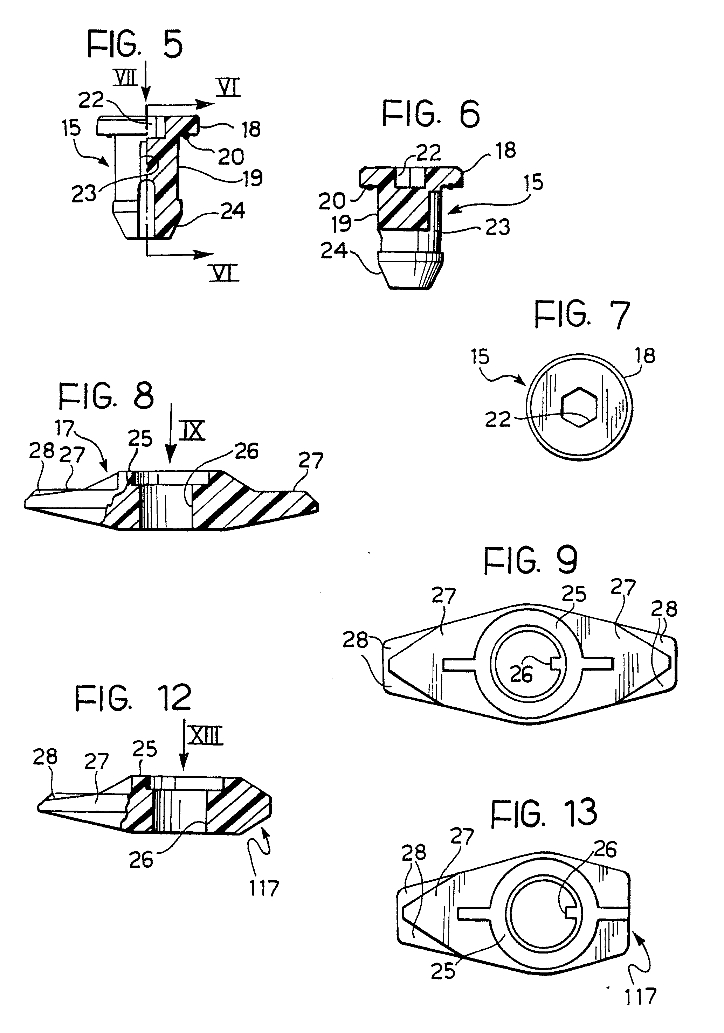

With reference in greater detail to Figures 4 to 9, each revolving catch 14 comprises an operating pin 15 mounted rotatably in a hole 16 in the central part 9 of the cover 3 and a cam member 17 coupled for rotation with the operating pin 15 inside the conduit 1.

The operating pin 15 has a circular head 18 and a shank 19. The head 18 is housed, with the interposition of a toroidal seal 20, in a recessed seat 21 formed in the central part 9 of the cover 3 around the hole 16. The upper face of the head 18, that is, its face opposite the shank 19, is thus arranged flush with the outer surface of the central portion 9 of the cover 3 and has a hexagonal cavity 22 for the insertion of an operating tool for rotating the pin 15.

The shank 19 is of the radially contractible type and can be irreversibly engaged axially by means of a longitudinal slot 23 and a frusto-conical part 24 at its end opposite the head 18. The shank 19 engages a central hub part 25 of the cam member 17: axial retention is achieved by the abutment of the frusto-conical end 24 with the lower face of the hub 25, and coupling for rotation is achieved by the engagement of an internal projection 26 of the hub 25 in the longitudinal slot 23 of the shank 19. A rotation imparted to the shank 19 by means of the head 18 thus results in an identical rotation of the cam member 17.

On opposite sides of the hub 25, the cam member 17 has two radial arms 27 whose ends have chamfered or wedge-shaped sides 28.

The revolving catches 14 can be rotated by the operation of their heads 18 between a position, shown in Figures 2 to 4, in which the cover 3 is clamped to the channel 4, and a release position in which the cover 3 and the channel 2 can be separated.

In the clamping position, the operating pin 15 is arranged in an angular position such that the arms 27 of the cam member 17 are perpendicular to the side walls 6 of the channel 2 and fit tightly against the lower faces of the horizontal portions 8 of the side walls 6. The horizontal portions 8 and the horizontal portions 11 of the cover 3 are thus clamped tightly together (by virtue of the resilient yielding of the seals 13) so that the cover 3 and the channel 2 are fixed sealingly together.

In order to separate the cover 3 and the channel 2, it suffices to rotate the operating pin 15 towards a release position which corresponds to the disengagement of the arms 27 from the horizontal portions 8 of the walls 6 of the channel 2.

The clamping and release operations can be achieved extremely quickly and easily: in particular, the positioning in the clamping position is facilitated by the wedge-shaped surfaces 28 of the arms 27.

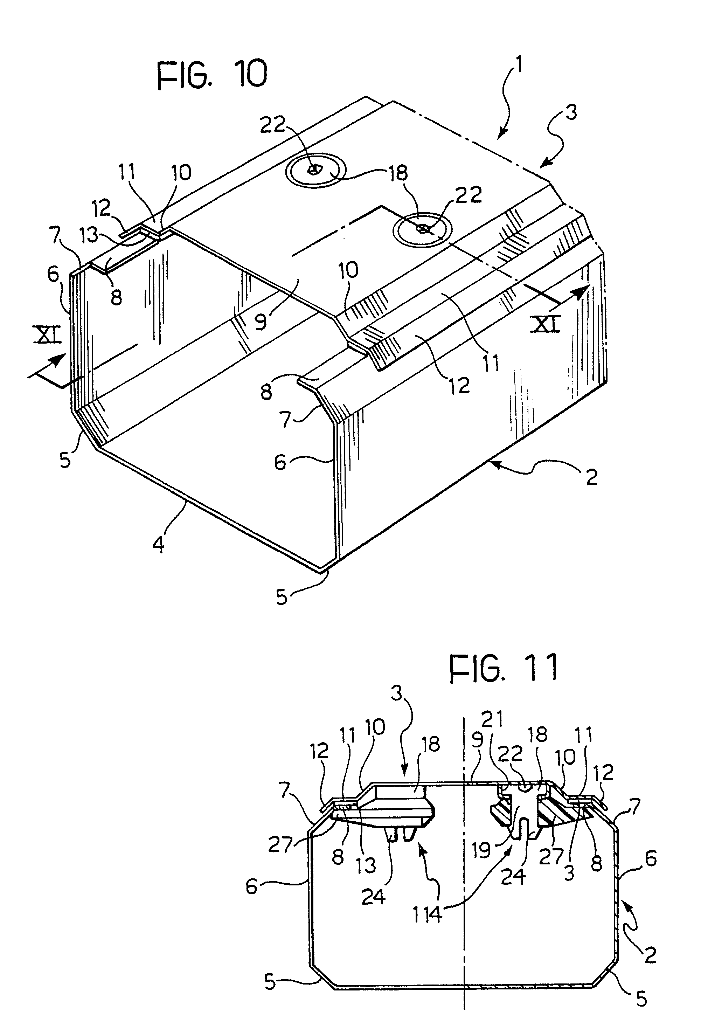

The variant shown in Figures 10 to 13 is generally similar to the embodiment described above and only the differences will be described in detail with the use of the same reference numerals for identical or similar parts.

According to this variant, the width of the base wall 4 of the channel 2 is greater and is approximately double the height of its two side walls 6. Consequently, the cover 3 is also wider and two parallel rows of revolving catches 114 carried by the central portion 9 adjacent the side portions 10 are therefore provided for connecting it to the channel 2. Unlike the revolving catches 14, the cam members 117 of the revolving catches 114 each have only one arm 27 for cooperating with the portion 8 of the corresponding side wall 6 of the channel 2. In other respects, the revolving catches 114 are exactly the same as the catches 14 described above and operate in an identical manner.

## Claims

1. A protective conduit for electrical cables, comprising a channel, a cover, and means for interconnecting the cover and the channel in a quickly separable manner, characterised in that the channel (2) has side walls (6) with free edges (7, 8) which are bent inwardly of the conduit (1) and on which corresponding longitudinal end parts (11, 12) of the cover (3) bear with the interposition of respective seals (13), and in that the interconnection means comprise a plurality of revolving catches (14; 114) spaced along the conduit (1) and carried by the cover (3) so as to be rotatable between a clamping position in which they engage the aforesaid bent edges (8) of the channel (2) from below and clamp them against the corresponding longitudinal bearing parts (11) of the cover (3), and a release position in which they do not interfere with the channel (2)

2. A conduit according to Claim 1, characterised in that each revolving catch (14; 114) comprises an operating pin (15) inserted rotatably in a hole (16) in the cover (3) and having an operating part (18, 22) which can be operated from outside the conduit (1), the pin (15) being coupled for rotation with an internal cam member (17, 117) having at least one radial arm (27) for cooperating with a corresponding bent edge (8) of the channel (2).

3. A conduit according to Claim 2, characterised in that the at least one radial arm (27) has sides (28) with wedge-shaped profiles.

4. A conduit according to Claim 2, characterised in that the operating part of the pin (15) is constituted by a head (18) which is housed, with the interposition of a seal (20), in a recessed seat (21) in the cover (3) flush with the outer face thereof; the head (18) having a cavity (22) for the engagement of an operating tool.

5. A conduit according to any one of Claims 2 to 4, characteristed in that the revolving catches (14) are arranged in a single row along the middle of the cover (3) and their cam members (17) each have a pair of opposed radial arms (27) for cooperating simultaneously with both the bent edges (8) of the channel (2).

6. A conduit according to any one of Claims 2 to 4, characterised in that the revolving catches (114) are arranged in two rows adjacent opposite sides of the cover (3) and their cam members (117) each have only one radial arm (27) for cooperating with a respective, adjacent bent edge (8) of the channel (2).

FIG. 1

FIG. 2

# FIG. 3

EP 0 409 806 A2

FIG. 4

7

FIG. 5

22
15
23
VII
VI
18
20
19
24
VI

FIG. 6

22
18
20
19
24
15
23

FIG. 7

15
22
18

FIG. 8

17
28 27
25
IX
26
27

FIG. 9

27
25
27
28
26
28

FIG. 12

28
27
25
XIII
26
117

FIG. 13

28
27
26
25
117

# FIG. 10

# FIG. 11